(19) Europäisches Patentamt / European Patent Office / Office européen des brevets

(11) **EP 3 012 937 B1**

(12) **EUROPEAN PATENT SPECIFICATION**

(45) Date of publication and mention
of the grant of the patent:
**25.03.2020   Bulletin 2020/13**

(21) Application number: **13887235.3**

(22) Date of filing: **21.06.2013**

(51) Int Cl.:
*H02J 3/38* (2006.01)          *F03D 7/04* (2006.01)
*F03D 9/00* (2016.01)          *H02J 3/24* (2006.01)

(86) International application number:
**PCT/JP2013/067041**

(87) International publication number:
**WO 2014/203388 (24.12.2014 Gazette 2014/52)**

(54) **CONTROL SYSTEM FOR RENEWABLE ENERGY POWER GENERATION FACILITIES, METHOD FOR CONTROLLING SAME, AND RENEWABLE ENERGY POWER GENERATION SYSTEM**

STEUERUNGSSYSTEM FÜR ANLAGEN ZUR STROMERZEUGUNG AUS ERNEUERBAREN ENERGIEN, VERFAHREN ZUR STEUERUNG DAVON UND SYSTEM ZUR STROMERZEUGUNG AUS ERNEUERBAREN ENERGIEN

SYSTÈME DE COMMANDE POUR INSTALLATIONS DE GÉNÉRATION ÉLECTRIQUE À ÉNERGIE RENOUVELABLE, SON PROCÉDÉ DE COMMANDE, ET SYSTÈME DE GÉNÉRATION ÉLECTRIQUE À ÉNERGIE RENOUVELABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.04.2016   Bulletin 2016/17**

(73) Proprietor: **Hitachi, Ltd.**
**Chiyoda-ku**
**Tokyo 100-8280 (JP)**

(72) Inventors:
• **UCHIYAMA Noriyuki**
**Tokyo 100-8280 (JP)**

• **KONDOU Shinichi**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 2 270 332          EP-A1- 2 603 696**
**EP-A2- 2 452 068          JP-A- 2007 009 804**
**JP-A- 2012 241 576**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a control system of renewable energy power generation equipment, a control method thereof, and a renewable energy power generation system, and particularly, to a control system of renewable energy power generation equipment, a control method thereof, and a renewable energy power generation system which are suitable for frequency stabilization of a power grid in renewable energy power generation equipment using a renewable energy source such as wind power, solar heat, and the like which is operated by being connected to the power grid.

Background Art

In recent years, introduction of renewable energy power generation equipment using a renewable energy source such as wind power generation and solar power generation to a power grid has been advanced as a countermeasure to the manifestation of global environmental issues including global warming and acid rain, depletion of fossil resources, ensuring energy security, and the like.

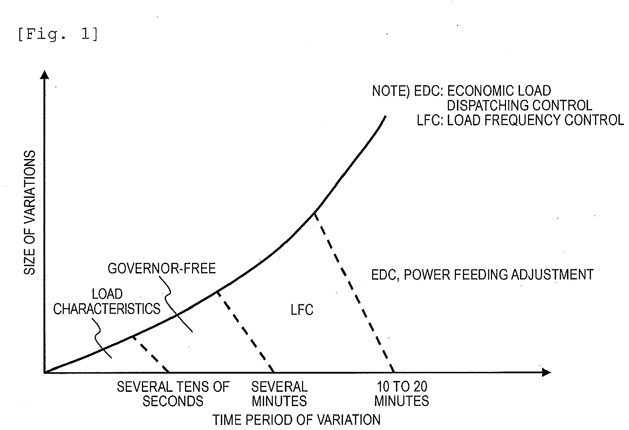

In general, in a power grid, as illustrated in Fig. 1, control and operation is performed so as to maintain a frequency within a proper range by control sharing including governor-free operation of a generator, Load Frequency Control (LFC), and Economic Load Dispatching Control (EDC) according to a period of load variation.

Reduction of frequency stability of the power grid is concerned for the following reasons with an increase in the introduction of the renewable energy power generation equipment described above. First, if the renewable energy power generation equipment is increased, a capacity ratio of so-called middle-load power supply and peak-load power supply such as a thermal power station and a hydroelectric power station to the capacity of all power equipment is relatively decreased. Thus, a lack of supply and demand adjustability in which a balance of supply and demand is not maintained occurs. Furthermore, the renewable energy power generation equipment using wind power generation, solar power generation, and the like is connected to the power grid through a power converter in many cases. Thus, a ratio of power supply of a rotary machine type having inertia to be connected to the power grid is decreased in response to the decrease in middle-load power supply described above, and thereby the frequency variation is more likely to occur with variation of the load.

Particularly, the reduction of frequency stability is an obstacle when expanding introduction of the renewable energy power generation equipment and this is difficult to counter with only equipment on the power grid side. It is considered to be important that the renewable energy power generation equipment contributes to the frequency maintenance of the power grid in the future.

The contribution of the renewable energy power generation equipment to the frequency maintenance of the power grid is disclosed in PTL 1. A technique in which an output of wind power generation is adjusted in response to a change in the frequency of the power grid and a change in wind velocity thereby contributing to a suppression of the frequency variation of approximately several seconds is disclosed in PTL 1.

EP 2 603 696 A1 a method of operating a partial load wind turbine supplying electrical power to an electrical grid includes monitoring stability of the grid and upon detection of a reduced grid stability, changing operation of the wind turbine by limiting wind cost fluctuations of the active power supply to the electrical grid or by reducing an already existing limit to fluctuations of the active power supply.

In EP 2 452 068 A2 a wind farm may include a plurality of variable speed wind turbines. A centralized controller may be configured to selectively adjust a respective electrical output power from each of the wind turbines.

In EP 2 270 332 A1 a method of operating a wind turbine to guarantee primary or secondary regulation in an electric grid is suggested. The network frequency is controlled via an active power reserve obtained by interacting in a coordinated manner with the speed regulation that acts on the power generated or on the pitch angle.

In JP 2007 009804 A a schedule system for output power control of a wind power plant is described.

Citation List

Patent Literature

PTL 1: JP-T-2013-501484

# EP 3 012 937 B1

Summary of Invention

Technical Problem

In general, in output variation with a period of approximately several seconds by the renewable energy power generation equipment using wind power generation, solar power generation, and the like, a smoothing effect in which variations are leveled with each other can be expected when considering that power generation equipment is installed to be widely geographically distributed. Thus, it does not have a significant effect on the frequency variation of the power grid. Therefore, for the renewable energy power generation equipment to contribute to the frequency maintenance of the power grid, it is considered the most effective way to suppress the frequency variation with a time period of several minutes to several tens of minutes that is a target time region of the LFC.

However, in the technique disclosed in PTL 1, the output adjustment is performed by using inertia energy provided by windmill blades and generators of a wind power generation system. Thus, the technique can contribute to a suppression of the frequency variation with a period of approximately several seconds, but since the inertia energy available is small, there is a problem that the technique cannot support the output adjustment to contribute to a suppression of the frequency variation with a period of several minutes or more which is a region the LFC described above.

The invention is made in view of the above situation and an object of the invention is to provide a control system of renewable energy power generation equipment, a control method thereof, and a renewable energy power generation system which can contribute to a suppression of the frequency variation with a period of several minutes to several tens of minutes that is a control region of LFC without using auxiliary equipment such as a battery.

Solution to Problem

The aforementioned object is solved by the invention according to the independent claims. Further preferred developments are described by the dependent claims.

Advantageous Effects of Invention

According to the invention, there is an effect of contributing to the suppression of the frequency variation with a period of several minutes to several tens of minutes that is the control region of the LFC without using auxiliary equipment such as a battery.

Brief Description of Drawings

[Fig. 1] Fig. 1 is a characteristic diagram illustrating sizes of variations in time periods of load variation of a general power grid.
[Fig. 2] Fig. 2 is a schematic configuration diagram illustrating Example 1 of a control system of renewable energy power generation equipment of the invention.
[Fig. 3] Fig. 3 is a diagram illustrating a detailed configuration of a control device in Example 1 of the control system of the renewable energy power generation equipment of the invention.
[Fig. 4] Fig. 4 is a control flowchart of the control device in Example 1 of the control system of the renewable energy power generation equipment of the invention.
[Fig. 5] Fig. 5 is a diagram describing a determination method of output restriction in Example 1 of the control system of the renewable energy power generation equipment of the invention.
[Fig. 6] Fig. 6 is a diagram describing a control operation example in Example 1 of the control system of the renewable energy power generation equipment of the invention.
[Fig. 7] Fig. 7 is a diagram describing another control operation example in Example 1 of the control system of the renewable energy power generation equipment of the invention.
[Fig. 8] Fig. 8 is a schematic configuration diagram illustrating a renewable energy power generation system that is Example 2 of the invention.
[Fig. 9] Fig. 9 is a diagram illustrating a detailed configuration of a control system in the renewable energy power generation system that is Example 2 of the invention.
[Fig. 10] Fig. 10 is a control flowchart of the control system in the renewable energy power generation system that is Example 2 of the invention.
[Fig. 11] Fig. 11 is a diagram describing a control operation example in the renewable energy power generation system that is Example 2 of the invention.

Description of Embodiments

Hereinafter, a control system of renewable energy power generation equipment, a control method thereof, and a renewable energy power generation system of the invention will be described with reference to illustrated examples. Moreover, for reference numerals, the same reference numerals are used for the same configuration components in each view.

Example 1

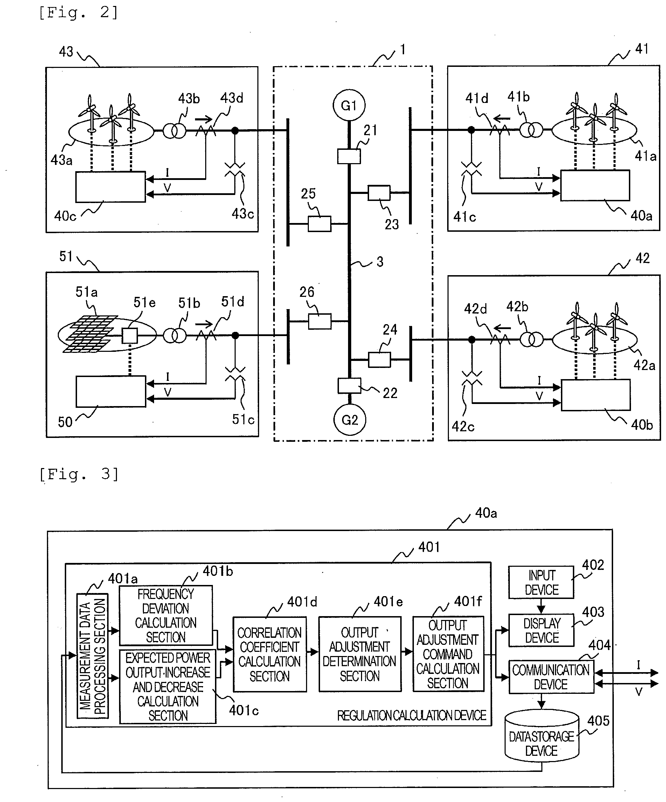

Fig. 2 is an example of a schematic configuration of renewable energy power generation equipment (hereinafter, referred to as RES power generation equipment) according to an embodiment of the invention. The RES power generation equipment configured of wind power generation equipment 41, 42, and 43, and solar power generation equipment 51 of which power outputs are changed in response to meteorological conditions are connected to a power grid 1 which is formed by connecting large-scale generation equipment G1 and G2 of power grids corresponding to a thermal power station, a hydroelectric power station, and the like, and the substations 21, 22, 23, 24, and 25 by using a power transmission line 3. The power output of each piece of RES power generation equipment is supplied to each customer (not illustrated) connected to the power grid through the power transmission line 3.

The RES power generation equipment does not need to be installed so as to be concentrated within a particular area and are respectively installed by being distributed at locations at which good wind situation and insolation conditions are provided. In Fig. 2, only the wind power generation equipment 41, 42, and 43, and the solar power generation equipment 51 are illustrated as the RES power generation equipment for simplicity, but in fact, it is assumed that more RES power generation equipment is connected to the power grid 1. In addition, as elements configuring the RES power generation equipment and the power grid 1, the minimum number of elements necessary for describing the invention are described.

The wind power generation equipment 41, 42, and 43 illustrated in the view is configured of wind power generation system groups 41a, 42a, and 43a formed of a plurality of windmills, generators, connection power converters, and the like, connection transformers 41b, 42b, and 43b for connecting the wind power generation system groups 41a, 42a, and 43a to the power grid 1, and control devices 40a, 40b, and 40c that have functions of calculating and transmitting control commands for adjusting outputs of each piece of of the wind power generation equipment 41, 42, and 43, based on total power outputs of the wind power generation system groups 41a, 42a, and 43a, voltages and currents that are measured by voltage detectors 41c, 42c, and 43c, and current detectors 41d, 42d, and 43d measuring voltages and currents of connection points (hereinafter, referred to as grid connection points) of the power grid 1, and meteorological characteristics (wind velocity, wind direction, air temperature, and the like) that are measured by an anemometer and the like installed in the windmill.

Similarly, the solar power generation equipment 51 is configured of a solar power generation system formed of a plurality of solar panels 51a, a connection power converter 51e, and the like, a connection transformer 51b for connecting the plurality of solar panels 51a to the power grid 1, and a control device 50 that has functions of calculating and transmitting control commands for adjusting an output of the solar power generation equipment 51, based on a power output of the solar power generation system, a voltage and a current that are measured by a voltage detector 51c and a current detector 51d measuring a voltage and a current of a connection point of the power grid 1, and meteorological characteristics (insolation amount, air temperature, and the like) that are measured by an insolation amount meter and a thermometer installed in the solar panel 51a.

Fig. 3 illustrates a functional configuration diagram of the control device 40a of the wind power generation equipment 41. Functional configurations of the control devices 40b and 40c of the wind power generation equipment 42 and 43, and the control device 50 of the solar power generation equipment 51 are also similar and here, the wind power generation equipment 41 is mainly described.

As illustrated in the view, the control device 40a of the wind power generation equipment 41 is schematically configured of a control calculation device 401 that calculates the control commands transmitted to the wind power generation system group 41a, a data storage device 405 that stores the measurement information, a history of the control commands, and the like of the wind power generation equipment 41, an input device 402 into which an operator inputs operation commands, a display device 403 in which the operator checks operation situations and the like, and a communication device 404 for controlling transmitting and receiving of the control commands and the measurement information. The communication device 404 performs information communication with the wind power generation system group 41a through the communication line.

Furthermore, the control calculation device 401 is configured of a measurement data processing section 401a, a frequency deviation calculation section 401b for calculating a frequency deviation $\Delta f$ from a frequency f of the power grid 1 detected from a voltage waveform measured by the voltage detector 41c, an expected power output·increase and decrease calculation section 401c that calculates an expected power output $P_1^*$ and an increase and decrease state value of the wind power generation equipment 41 from a measured wind velocity, a correlation coefficient calculation section 401d that calculates a correlation coefficient Ci between the frequency deviation $\Delta f$ and the expected power output $P_1{}^*$, an output adjustment determination section 401e that performs determination whether or not the output adjustment of the wind power generation equipment 41 is performed by the correlation coefficient and the increase and decrease state value of the expected power output, and an output adjustment command calculation section 401f that calculates an output adjustment command value.

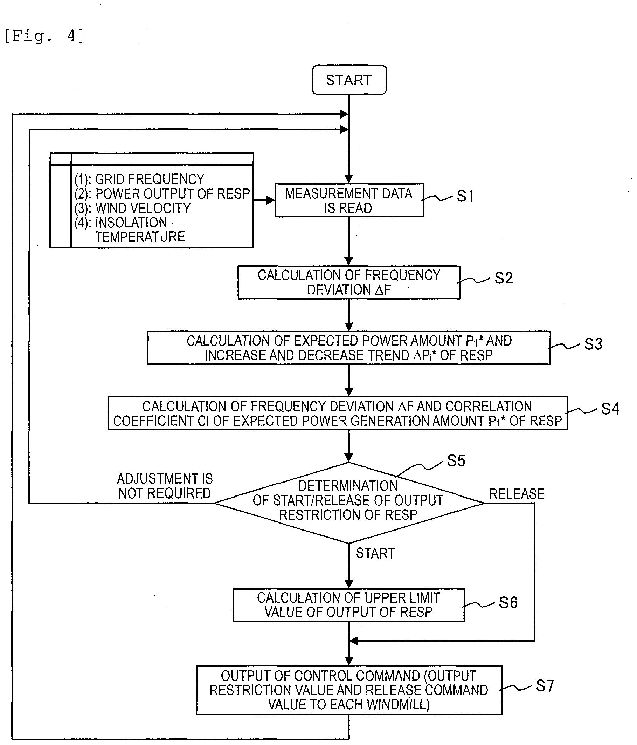

Next, flows of processing of the control devices 40a, 40b, and 40c of the wind power generation equipment 41, 42, and 43 will be described with reference to Fig. 4.

As illustrated in Fig. 4, first, in step S1, electrical characteristic data such as the frequency of the power grid 1, the voltage, and the current of the connection point, and the meteorological characteristic data such as the wind velocity that is periodically measured and transmitted by the wind power generation equipment 41, 42, and 43 are read from the data storage device 405. In a case of the solar power generation equipment 51, the insolation amount and the air temperature are read instead of the wind velocity.

In step S2, the frequency deviation $\Delta f$ as a difference with a rated frequency fo is calculated in Expression (1) by using the measured frequency f of the power grid 1.

$$\Delta f \;=\; f \;-\; fo \qquad (1)$$

Here, f: measurement value of frequency (Hz)
fo: rated frequency of power grid (Hz)

In step S3, expected power outputs $P_1{}^*$, $P_2{}^*$, and $P_3{}^*$ in each piece of of the wind power generation equipment 41, 42, and 43 is calculated by Expression (2) by using the wind velocity data measured by the wind power generation equipment 41, 42, and 43 respectively.

$$P_i{}^* \;=\; (1/2) \;\cdot\; \rho \;\cdot\; A_i \;\cdot\; V^3 \;\cdot\; \eta_i \;\times\; m \;\times\; 10^6 \qquad (2)$$

Here, $P_i{}^*$: expected power output of $i^{th}$ wind power generation equipment (MW)
p: air density (kg/m$^3$)
Ai: wind receiving area of windmill blades of $i^{th}$ wind power generation equipment (m$^2$)
Vi: wind velocity measured in $i^{th}$ wind power generation equipment (m/s)
Hi: power efficiency of wind power generation system of $i^{th}$ wind power generation equipment (%)

Furthermore, the increase and decrease state value $\Delta P_i{}^*$ of the expected power output is calculated by Expression (3) by using the expected power output $P_1{}^*$ and a moving average deviation $P_i{}^*\_ave$ obtained by Expression (2).

$$\Delta P_i{}^* \;=\; \phi \; (P_i{}^* \;-\; P_i{}^*\_ave) \qquad (3)$$

Here, $\phi(x)$ is a symbol function that is defined in Expression (4).

$$\phi(x) \;=\; \begin{cases} 1 & \left(x \;>\; \varepsilon^+\right) \\ 0 & \left(\varepsilon^- \;\leq\; x \;\leq\; \varepsilon^+\right) \\ -1 & \left(x \;<\; \varepsilon^-\right) \end{cases} \qquad (4)$$

Here, $\varepsilon^+$: upper limit value of dead zone of change amount of expected power output
$\varepsilon^-$: lower limit value of dead zone of change amount of expected power output

The expected power output $P_i{}^*$ of the solar power generation equipment 51 is calculated by Expression (5) by using an insolation amount measurement value Sr (W/m$^2$) and an outside temperature To (°C).

$$P_i{}^* \;=\; Sr \;\cdot\; Ks \;\cdot\; Kpv \;\cdot\; Kt \; (To) \;\cdot\; Kb \;\cdot\; Kc \;\cdot\; Kpcs \;\times\; 10^{-3} \; (MW) \qquad (5)$$

Here, Ks: insolation amount correction coefficient

Kpv: panel capacity conversion coefficient

Kt (To): temperature correction coefficient

Kb: dirt coefficient

Kc: cable efficiency coefficient

Kpcs: PCS conversion efficiency coefficient

In step S4, in order to evaluate influences of outputs of the wind power generation equipment 41, 42, and 43 to the frequency variation of the power grid 1, a correlation coefficient $C_i$ between the frequency deviation $\Delta f$ of the power grid 1 and the expected power output $P_i^*$ of the wind power generation equipment 41, 42, and 43 is calculated by Expression (6).

$$Ci = \frac{\sum_{k=1}^{n}\left(\Delta f(k) - \overline{\Delta f}\right)\left(Pi(k) - \overline{Pi}\right)}{\sqrt{\sum_{k=1}^{n}\left(\Delta f(k) - \overline{\Delta f}\right)^2}\sqrt{\sum_{k=1}^{n}\left(Pi(k) - \overline{Pi}\right)^2}} \qquad (6)$$

Here, $\Delta f$ and $P_i^*$ use data for past n point going back from the current time.

In step S5, it is determined whether or not the output restriction is performed or whether or not the output restriction is released in the wind power generation equipment 41, 42, and 43. First, the output restriction is performed only when the following three conditions are satisfied.

$$\Delta f > \eta_{\Delta fp}$$

$(\eta_{\Delta fp}$: detection determination value of increase in frequency)

$$(7)$$

$$\Delta P_i^* > 0 \qquad (8)$$

$$Ci > \eta_c$$

$(\eta_c$: detection determination value of positive correlation)

$$(9)$$

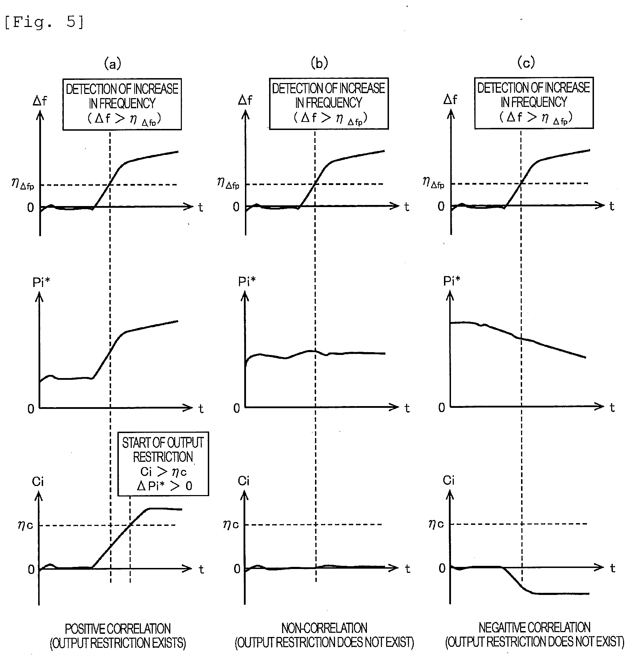

A determination method of the output restriction described above will be described with reference to Fig. 5. Fig. 5(a) illustrates a case where a positive correlation exists in the frequency deviation $\Delta f$ and a deviation $\Delta P_i^*$ of the expected power output, Fig. 5(b) illustrates a case where non-correlation exists in both, and Fig. 5(c) illustrates a case where a negative correlation exists in both.

If the positive correlation of Fig. 5(a) exists, since all of Expressions (7), (8), and (9) are satisfied, the output restriction is started at the time of Expression (9) being satisfied. As illustrated in Fig. 5(b), if there is non-correlation in the frequency deviation $\Delta f$ and the deviation $\Delta P_i^*$ of the expected power output, although Expression (7) is satisfied, $P_i^*$ is hardly changed with respect to a change in the frequency and $\Delta P_i^*$ is substantially zero. Thus, Expression (8) and Expression (9) are not satisfied, and the output restriction is not performed. Furthermore, as illustrated in Fig. 5(c), if the negative correlation exists in the frequency deviation $\Delta P_i$ and the deviation $\Delta P_i^*$ of the expected power output, although Expression (7) is satisfied, $P_i^*$ is reduced in contrary and $\Delta P_i^*$ is a negative value. Thus, Expression (8) and Expression (9) are not satisfied, and the output restriction is not performed.

Furthermore, release of the output restriction is not illustrated, but as indicated in Expression (10), the output restriction is released if the frequency deviation $\Delta f$ is lower than a negative threshold value $\eta_{\Delta fn}$.

$$\Delta f \ < \ \eta_{\Delta fn}$$

$(\eta_{\Delta fp}$: detection determination value of decrease in frequency)

$$(10)$$

In step S6, a target value $P_{i\_}tg$ of the output restriction performed in the wind power generation equipment 41, 42, and 43 is calculated. For example, as indicated in Expression (11), a current output $P_i$ of the wind power generation equipment 41, 42, and 43 is restricted at a predetermined ratio or a predetermined minimum output value $P_{i\_}min$ may be the target value of the output restriction.

$$P_{i\_}tg \ = \ P_i \ \times \ \xi/m \qquad (11)$$

Here, $\xi$: ratio $(0 < \xi < 1)$
m: number of wind power generation systems in wind power generation equipment 41

Finally, in step S7, the target value is transmitted to each windmill of each of the wind power generation system groups 41a, 42a, and 43a. In this case, an upper limit value of an output change rate that is defined by an output change amount per unit time is also transmitted. This is, for example, 10%/20 minutes of the rated output as the output change rate in a process necessary for satisfying connection conditions of the wind power generation equipment.

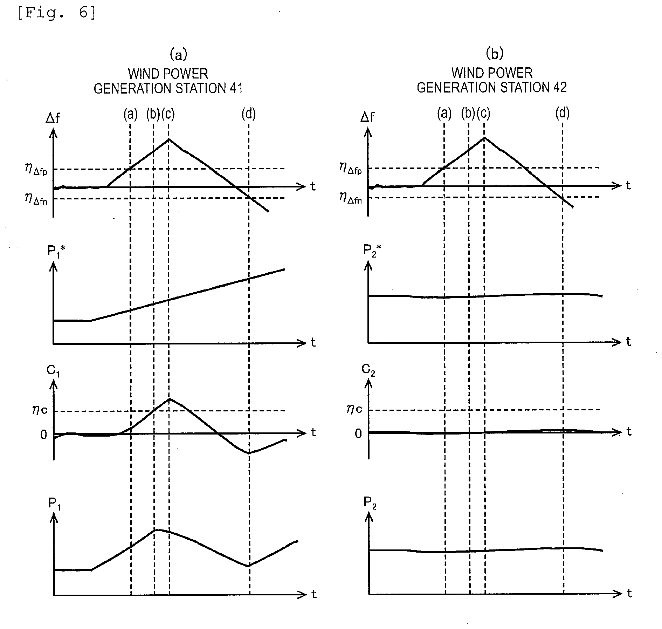

Fig. 6 illustrates a control operation example of the control system of the renewable energy power generation equipment in Example 1 of the invention. Here, for ease of understanding, a case where two wind power generation equipment 41 and 42 are connected to the power grid 1 is assumed and described.

Fig. 6 is an example of a case where the expected power output $P_i^*$ obtained from the wind velocity in the wind power generation equipment 41 is monotonically increased from a constant and an expected power output $P_2^*$ is substantially constant in the wind power generation equipment 42. In the wind power generation equipment 41, a control operation of a case where the frequency of the power grid 1 is increased with an increase in the expected power output $P_1^*$ is described.

At time (a) indicated in Fig. 6, it is detected that the frequency deviation $\Delta f$ exceeds the positive threshold value $\eta_{\Delta fp}$. In this case, the correlation coefficient $C_1$ is started to be increased from zero, but as described in Expression (6), since calculation is performed by using the data for past n point going back from the current time, the frequency deviation $\Delta f$ has characteristics slightly delayed from the changes in $\Delta f$ and $P_1^*$, and is lower than the threshold value $\eta_C$ at the time.

Next, at time (b), it is detected that the correlation coefficient $C_1$ exceeds the positive threshold value $\eta_C$. In this case, since the expected power output $P_1^*$ tends to be increased and the deviation $\Delta P_1^*$ of Expression (3) is positive, the wind power generation system configuring the wind power generation equipment 41 starts the output restriction aiming to the target value. The frequency of the power grid 1 is started to be reduced from time (c) by the influence. In the wind power generation system, the output is further reduced aiming to the target value.

At time (d), since it is detected that the frequency deviation $\Delta f$ of the power grid 1 is lower than the negative threshold value $\eta_{\Delta fn}$, a release command of the output restriction is transmitted to the wind power generation system and, as a result, the output $P_1$ of the wind power generation equipment 41 is increased according to the wind velocity. In this case, in the wind power generation equipment 42 in which the output is substantially constant, since Expressions (8) and (9) are not satisfied, the output restriction is not applied.

As described above, according to the example, when the frequency of the power grid is increased, the output restriction is not performed in all wind power generation equipment and the output restriction can be performed only in the wind power generation equipment which affects the increase in the frequency. Thus, it is possible to contribute to suppression of the frequency variation of the LFC region by effective output adjustment of the minimum required.

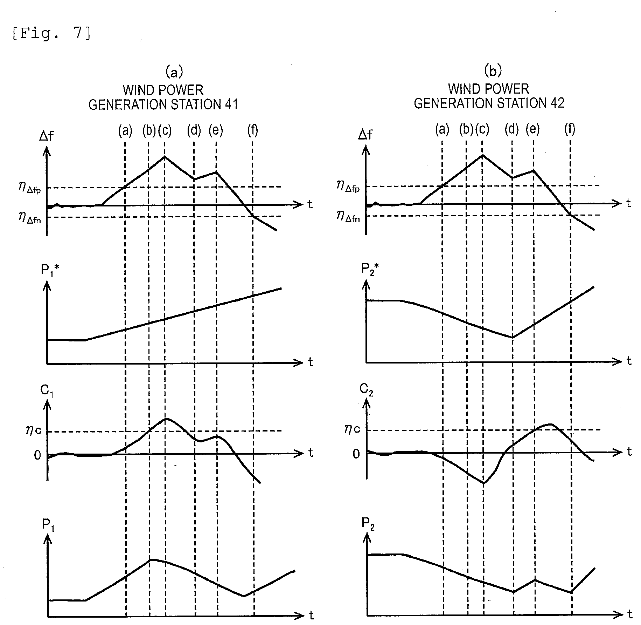

Another control operation example of the control system of the renewable energy power generation equipment in Example 1 of the invention will be described with reference to Fig. 7. Similar to Fig. 6, a case where two wind power generation equipment 41 and 42 are connected to the power grid is assumed and described. Fig. 7 is an example of a case where the expected power output $P_1^*$ obtained from the wind velocity in the wind power generation equipment 41 is monotonically increased from a constant, the expected power output $P_2^*$ is substantially monotonically decreased from the constant and then is started to be increased in the wind power generation equipment 42.

First, a case where the frequency of the power grid 1 is increased together with the increase in the expected power output $P_1^*$ of the wind power generation equipment 41 is assumed and a control operation at this time is described.

At time (a) indicated in Fig. 7, it is detected that the frequency deviation $\Delta f$ exceeds the positive threshold value $\eta_{\Delta fp}$. The correlation coefficient $C_1$ is started to be increased from zero, but as described in Expression (6), since calculation is performed by using the data for past n point going back from the current time, the frequency deviation $\Delta f$ has characteristics slightly delayed from the changes in $\Delta f$ and $P_1^*$, and is lower than the threshold value at the time.

Next, at time (b), it is detected that the correlation coefficient Ci exceeds the positive threshold value $\eta_C$. In this case, since the expected power output $P_1^*$ tends to be increased and the deviation $\Delta P_1^*$ of Expression (3) is positive, the wind power generation system configuring the wind power generation equipment 41 starts the output restriction aiming to the target value. The frequency of the power grid 1 is started to be reduced from time (c) by the influence. In the wind power generation system, the output is further reduced aiming to the target value. On the other hand, in the wind power generation equipment 42, Expressions (8) and (9) are not satisfied, the output restriction is not applied.

Next, at time (d), since the output of the wind power generation equipment 42 is started to be increased, the frequency is started to be increased. At time (e), in the wind power generation equipment 42, since a correlation coefficient $C_2$ exceeds positive threshold value $\eta_C$ and the expected power output tends to be increased, the output restriction is started. As a result, the increased frequency tends to be reduced again and at time (d), it is detected that the frequency deviation $\Delta f$ of the power grid 1 is lower than the negative threshold value $\eta_{\Delta fn}$. Thus, the release command of the output restriction is transmitted to the wind power generation system of the wind power generation equipment 41 and 42 and, as a result, the outputs $P_1$ and $P_2$ of the wind power generation equipment 41 and 42 are increased according to the wind velocity.

As described above, according to the example, the output is adjusted while the wind power generation station performs the output restriction or releases the output restriction from time to time depending on a degree of influence for the expected power generation amount by the wind velocity on the increase in the frequency of the power grid. Thus, similar to Fig. 6, it is possible to contribute to suppression of the frequency variation of the LFC region by effective output adjustment of the minimum required.

According to the example described above, excessive output restriction of the renewable energy power generation equipment is prevented and suppressed without using auxiliary equipment such as battery with respect to the frequency variation of the LFC region of several minutes or more, which is the most effective in the frequency maintenance of the power grid and to which the output adjustment of a period of approximately several seconds of the single wind power generation system that is the related art cannot correspond.

[Example 2]

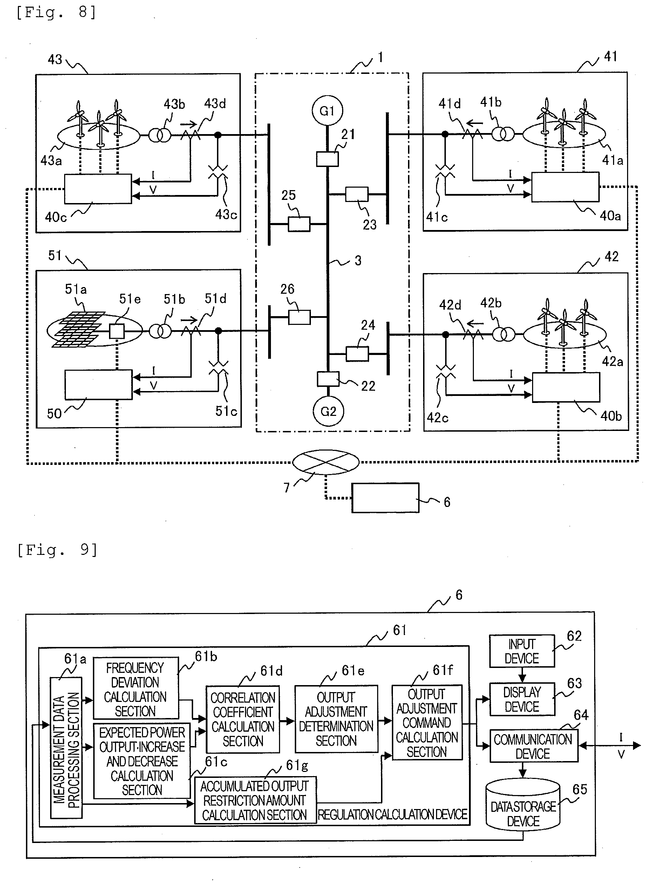

Next, a renewable energy power generation system including a plurality of RES power generation groups, which is Example 2 of the invention, will be described with reference to Figs. 8 and 9.

Fig. 8 is an example of a schematic configuration of the renewable energy power generation system including the RES power generation groups.

As illustrated in Fig. 8, the RES power generation equipment formed of wind power generation equipment 41, 42, and 43, and a solar power generation equipment 51 of which power outputs are changed in response to meteorological conditions are connected to a power grid 1 which is formed by connecting large-scale generation equipment G1 and G2 corresponding to a thermal power station, a hydroelectric power station, and the like, and substations 21, 22, 23, 24, and 25 by a power transmission line 3. The power output of each piece of RES power generation equipment is supplied to each customer (not illustrated) connected to the power grid 1 through a power transmission line 3. The RES power generation equipment are not need to be installed to be concentrated within a particular area and are respectively installed by being distributed at locations at which good wind situations and insolation conditions are provided.

In Fig. 8, as the RES power generation equipment, only the wind power generation equipment 41, 42, and 43, and the solar power generation equipment 51 are illustrated, but in fact, it is assumed that more plurality of power generation equipment are connected. In addition, as elements configuring the renewable energy power generation system and the power grid 1, the minimum number of elements necessary for describing the invention are described.

The wind power generation equipment 41, 42, and 43 illustrated in the view is configured of wind power generation system groups 41a, 42a, and 43a formed of a plurality of windmills, generators, connection power converters, and the like, connection transformers 41b, 42b, and 43b for connecting the wind power generation system groups 41a, 42a, and 43a to the power grid 1, and control devices 40a, 40b, and 40c that have functions of calculating and transmitting control commands for adjusting outputs of each piece of the wind power generation equipment 41, 42, and 43, based on total power outputs of the wind power generation system groups 41a, 42a, and 43a, voltages and currents that are measured by voltage detectors 41c, 42c, and 43c, and current detectors 41d, 42d, and 43d measuring voltages and currents of connection points (hereinafter, referred to as grid connection points) of the power grid 1, and meteorological characteristics (wind velocity, wind direction, air temperature, and the like).

Similarly, the solar power generation equipment 51 is configured of a solar power generation system formed of a plurality of solar panels 51a, a connection transformer 51b for connecting the plurality of solar panels 51a to the power grid 1, a voltage detector 51c and a current detector 51d that measure total power generation outputs of the plurality of solar panels 51a, and the voltages and the currents of the connection points to the power grid 1, a connection power converter 51e, and the like, and a control device 50 that has functions of calculating and transmitting control commands for adjusting an output of the solar power generation equipment 51, based on a power output of the solar power generation system, electrical characteristics such as the voltage of the grid connection point, and meteorological characteristics (insolation amount, air temperature, and the like).

Moreover, the control devices 40a, 40b, 40c, and 50 of the example have similar configuration to the control devices described in Example 1.

The wind power generation equipment 41, 42, and 43, and the solar power generation equipment 51 configuring the RES power generation equipment groups are connected to a control system 6 of the RES power generation equipment groups through a communication line 7. Input and output of information between each piece of of the power generation equipment 41, 42, 43, and 51, and the control system 6 are performed through the communication line 7.

Fig. 9 illustrates a functional configuration diagram of the control system 6 of the RES power generation equipment groups. As illustrated in the view, the control system 6 of the RES power generation equipment groups of the example is configured of a control calculation device 61 that calculates the control commands transmitted to the control devices 40a, 40b, 40c, and 50 of the RES power generation equipment groups, a data storage device 65 that stores the measurement information, a history of the control commands, and the like of the RES power generation equipment groups, an input device 62 into which an operator inputs operation commands, a display device 63 in which the operator checks operation situations and the like, and a communication device 64 for controlling transmitting and receiving of the control commands and the measurement information. The communication device 64 performs information communication with the RES power generation equipment groups through the communication line 7.

Furthermore, the control calculation device 61 is configured of a measurement data processing section 61a, a frequency deviation calculation section 61b for outputting a frequency deviation $\Delta f$ from a frequency f of the power grid 1, an expected power output·increase and decrease calculation section 61c that calculates an expected power output $P_1^*$ and an increase and decrease state of the wind power generation equipment 41 from a measured wind velocity, a correlation coefficient calculation section 61d that outputs a correlation coefficient $C_1$ between the frequency deviation $\Delta f$ and the expected power output $P_1^*$, an output adjustment determination section 61e that performs determination whether or not the output adjustment of the wind power generation equipment 41 is performed by the correlation coefficient and the increase and decrease state of the expected power output, an output adjustment command calculation section 61f that outputs an output adjustment command value, an accumulated output restriction amount calculation section 61g that outputs the accumulative value of the power amount in which the output restriction of each piece of RES power generation equipment is performed.

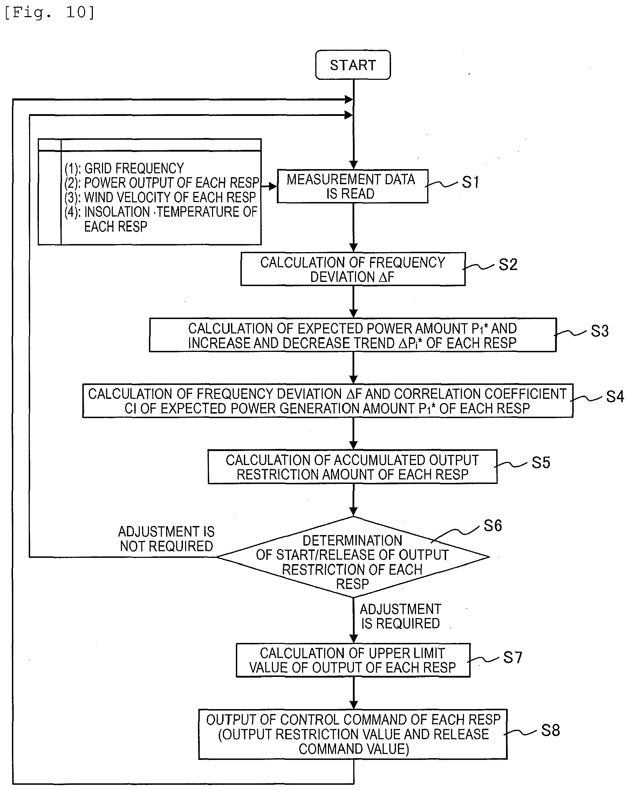

Next, flows of processing in the control system 6 of the RES power generation equipment groups will be described with reference to Fig. 10.

As illustrated in Fig. 10, first, in step S1, electrical characteristic data such as the frequency of the power grid 1, the voltage, and the current of the connection point, and the meteorological characteristic data such as the wind velocity from the wind power generation equipment 41, 42, and 43, the insolation amount, and the air temperature from the solar power generation equipment 51 which are periodically measured by each piece of the RES power generation equipment are read from the data storage device 65.

In step S2, the frequency deviation $\Delta f$ as a difference with a rated frequency fo is calculated in Expression (1) described above by using the measured frequency f of the power grid 1.

In step S3, an expected power output $P_i^*$ of each piece of RES power generation equipment is calculated. In each piece of of the wind power generation equipment 41, 42, and 43, the expected power output is calculated by Expression (2) by using the wind velocity data measured by the wind power generation equipment 41, 42, and 43 respectively. In the solar power generation equipment 51, calculation is performed by Expression (5) described above by using the insolation amount measurement value Sr ($W/m^2$) and the outside temperature To (°C). Furthermore, the deviation $\Delta P_i^*$ indicating the increase and decrease state of the expected power output is calculated by Expression (3) described above by using the expected power output $P_i^*$ obtained in Expression (2) and a moving average deviation $P_i^*\_ave$.

In step S4, in order to evaluate influences of outputs of the wind power generation equipment 41, 42, and 43 to the frequency variation of the power grid 1, a correlation coefficient $C_i$ between the frequency deviation $\Delta f$ of the power grid 1 and the expected power output $P_i^*$ of the RES power generation equipment is calculated by Expression (6) described above.

In step S5, an accumulative value $P_{i\_}loss$ of the power amount that can not be output by performing the output restriction in each piece of RES power generation equipment is calculated by Expression (12). That is, it represents that the RES power generation equipment having large value of $P_i$_loss contributes to suppression of the frequency variation.

$$P_i \_ loss = \int_0^t \left( P_i \ast - Pi \right) \, d\tau \qquad (12)$$

In step S6, it is determined whether or not the output restriction is performed or whether or not the output restriction is released in each piece of RES power generation equipment. First, similar to Fig. 4, the output restriction is performed only in a case where three conditions indicated in Expressions (7), (8), and (9) described above are satisfied.

In step S7, a target value $P_i$_tg of the output restriction that is performed in the RES power generation equipment is calculated. For example, as indicated in Expression (11) described above, an current output $P_i$ of the wind power generation equipment is restricted at a predetermined ratio. Otherwise, a predetermined minimum output value $P_i$_min may be the target value of the output restriction. In this case, if the current output $P_i$ of the wind power generation equipment is restricted at a predetermined ratio by Expression (11), the ratio $\xi$ ($0 < \xi < 1$) of Expression (11) is increased such that the output restriction amount is increased as the RES power generation equipment has a small accumulative value $P_i$_loss of the power amount of the output restriction of each piece of RES power generation equipment calculated in Expression (12). Similarly, if a predetermined minimum output value $P_i$_min is the target value of the output restriction, the value of Pi_loss is decreased such that the output restriction amount is increased as the RES power generation equipment has a small accumulative value $P_i$_loss of the power amount of the output restriction.

Finally, in step S8, the target value is transmitted to each piece of RES power generation equipment. In this case, an upper limit value of an output change rate that is defined by an output change amount per unit time is also transmitted. This is, for example, 10%/20 minutes of the rated output as the output change rate in a process necessary for satisfying connection conditions of the wind power generation equipment.

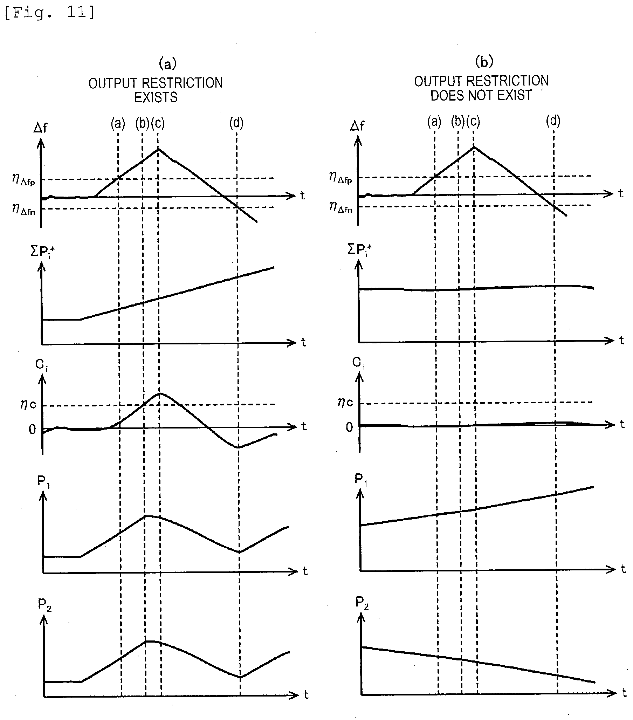

A control operation example of the control system 6 of the RES power generation equipment groups in Example 2 of the invention will be described with reference to Fig. 11. Here, for ease of understanding, a case where two wind power generation equipment 41 and 42 are connected to the power grid 1 is assumed and described.

Fig. 11(a) is an example of a case where a total expected power outputs $\Sigma P_i\ast$ of the RES power generation equipment groups are monotonically increased from a constant when the frequency of the power grid 1 is increased.

First, at time (a), it is detected that the frequency deviation $\Delta f$ exceeds the positive threshold value $\eta_{\Delta fp}$. The correlation coefficient Ci between the frequency deviation and the total expected power outputs $EP_i\ast$ of the RES power generation station groups is started to be increased from zero, but as described in Expression (6), since calculation is performed by using the data for past n point going back from the current time, the frequency deviation $\Delta f$ has characteristics slightly delayed from the changes in $\Delta f$ and $\Sigma P_i\ast$, and is lower than the threshold value $\eta_C$ at the time.

Next, at time (b), it is detected that the correlation coefficient Ci exceeds the positive threshold value $\eta_C$. In this case, since the total expected power output $\Sigma P_i\ast$ tends to be increased and the deviation $\Delta P_1\ast$ of Expression (3) is positive, the wind power generation equipment 41 and the wind power generation equipment 42, in which the outputs tend to be increased, start the output restriction aiming to the target value. The frequency of the power grid is started to be reduced from time (c) by the influence. In the wind power generation system, the output is further reduced aiming to the target value.

At time (d), since it is detected that the frequency deviation $\Delta f$ of the power grid 1 is lower than the negative threshold value $\eta_{\Delta fn}$, a release command of the output restriction is transmitted to the wind power generation system 41 and the wind power generation equipment 42 configuring the RES power generation equipment groups and, as a result, the outputs $P_1$ and $P_2$ of the wind power generation equipment 41 and 42 are increased according to the wind velocity.

Fig. 11(b) is an example of a case where aspects of output changes are different in the wind power generation equipment 41 and the wind power generation equipment 42 configuring the RES power generation equipment groups. Specifically, the wind power generation equipment 41 is monotonically increased and the wind power generation equipment 42 is monotonically decreased. In this case, both output changes are offset and then the total expected power outputs $\Sigma P_i\ast$ of the RES power generation equipment groups are substantially constant. In this case, since the frequency of the power grid 1 and the total expected power outputs are uncorrelated, the output restriction does not occur. As the RES power generation equipment groups, this can be said as appropriate control because it does not affect the frequency increase of the power grid 1.

According to the example described above, of course, the same effects as those of Example 1 are obtained and it is possible to suppress the total output restriction amounts and to contribute to maintenance of the frequency compared to a case where it is determined whether or not the output restriction is necessary in each piece of RES power generation equipment described in Figs. 6 and 7.

Moreover, the invention is defined in the independent claims and is not limited to the examples described above and includes various modifications. For example, the examples described above are those described in detail in order to clearly and easily describe the invention and are not intended to be limited to all necessary configurations described. Furthermore, it is possible to replace a part of the configuration of an example in the configuration of another example and it is possible to add the configuration of another example to the configuration of an example. Furthermore, it is possible to make addition, deletion, and substitution of other configurations to a part of the configuration of each example.

Reference Signs List

1 ⋯ power grid, 3 ⋯ power transmission line, 6 ⋯ control system of renewable energy power generation equipment group, 7 ⋯ communication line, 21, 22, 23, 24, 25 ⋯ substation, 40a, 40b, 40c ⋯ control device of wind power generation equipment, 41, 42, 43 ⋯ wind power generation equipment, 41a, 42a, 43a ⋯ wind power generation system group, 41b, 42b, 43b ⋯ connection transformer, 41c, 42c, 43c ⋯ voltage detector, 41d, 42d, 43d ⋯ current detector, 50 ⋯ control device of solar power generation equipment, 51 ⋯ solar power generation equipment, 51a ⋯ solar panel, 51b ⋯ connection transformer, 51c ⋯ voltage detector, 51d ⋯ current detector, 51e ⋯ connection power converter, 61, 401 ⋯ control calculation device, 61a, 401a ⋯ measurement data processing section, 61b, 401b ⋯ frequency deviation calculation section, 61c, 401c ⋯ expected power output·increase and decrease calculation section, 61d, 401d ⋯ correlation coefficient calculation section, 61e, 401e ⋯ output adjustment determination section, 61f, 401f ⋯ output adjustment command calculation section, 61g ⋯ accumulated output restriction amount calculation section, 62, 402 ⋯ input device, 63, 403 ⋯ display device, 64, 404 ⋯ communication device, 65, 405 ⋯ data storage device.

**Claims**

1. A control system (6) for renewable energy power generation equipment, which is configured to control renewable energy power generation equipment which includes a plurality of power generation devices generating power by using renewable energy sources and in which the plurality of power generation devices are operated by being connected to a power grid (1), the control system (6) comprising:

   a measuring unit that is configured to measure a frequency of the power grid (1);
   a measuring unit that is configured to measure meteorological characteristics of the renewable energy power generation equipment;
   a calculating unit that is configured to calculate frequency deviation of the power grid (1);

   the control system (6) **characterized in** further comprising:

   a calculating unit that is configured to calculate an expected power output of the renewable energy power generation equipment based on the meteorological characteristics measured by the measuring unit and to calculate an increase and decrease state value thereof based on the meteorological characteristics measured by the measuring unit that is configured to measure meteorological characteristics of the renewable energy power generation equipment;
   a calculating unit that is configured to calculate a correlation coefficient between the frequency deviation of the power grid (1) and the expected power output of the renewable energy power generation equipment; and
   a determining unit that is configured to determine whether or not output adjustment of the renewable energy power generation equipment is necessary by using the correlation coefficient between the frequency deviation and the expected power output, and the increase and decrease state value of the expected power output;
   wherein the control system (6) is configured such that an output of the renewable energy power generation equipment is restricted in case the determining unit determines that the output adjustment of the renewable energy power generation equipment is necessary, when the frequency deviation exceeds a predetermined positive threshold value, the correlation coefficient exceeds a positive threshold value, and the expected power output is in an increasing state, and
   the control system (6) is further configured such that when the frequency deviation is lower than a predetermined negative threshold value, output restriction of the renewable energy power generation equipment is released.

2. A renewable energy power generation system comprising renewable energy power generation equipment which includes a plurality of renewable energy power generation devices connected to a power grid (1) and the control system for renewable energy power generation equipment according to claim 1.

3. The renewable energy power generation system according to claim 2,
   wherein the plurality of power generation devices are wind power generation equipment (41, 42, 43), and

wherein the wind power generation equipment includes a wind power generation system (41a, 42a, 43a) that is formed of at least a plurality of windmills, generators, and a connection power converter, a connection transformer (41b, 42b, 43b, 51b) for connecting the wind power generation system (41a, 42a, 43a) to the power grid (1), a voltage detector (41c, 42c, 43c, 51c) and a current detector (41d, 42d, 43d, 51d) that are configured to measure a voltage and a current of a connection point to the power grid (1), and a control device that has a function of calculating and transmitting control commands for adjusting an output of the wind power generation equipment (41, 42, 43) based on the voltage and the current that are measured by the voltage detector 41c, 42c, 43c, 51c) and the current detector (41d, 42d, 43d, 51d), a power generation output of the wind power generation system (41a, 42a, 43a), and at least a wind velocity.

4. The renewable energy power generation system according to claim 2,
   wherein the plurality of power generation devices are solar power generation equipment (51), and
   wherein the solar power generation equipment (51) includes a plurality of solar panels (51a), a connection transformer (41b, 42b, 43b, 51b) for connecting the solar panels (51a) to the power grid (1), a voltage detector (41c, 42c, 43c, 51c) and a current detector (41d, 42d, 43d, 51d) that are configured to measure a voltage and a current of a connection point to the power grid (1), a control device that has a function of calculating and transmitting control commands for adjusting an output of the solar power generation equipment (51) based on the voltage and the current that are measured by the voltage detector (41c, 42c, 43c, 51c) and the current detector (41d, 42d, 43d, 51d), a power generation output of the solar panels (51a), an insolation amount, and an air temperature.

5. The renewable energy power generation system according to claim 3 or 4,
   wherein the control device (40a, 40b, 40c, 50) comprises a control calculation device (61, 401) that is adopted to calculate the control commands to be transmitted to the wind power generation equipment (41, 42, 43) or the solar power generation equipment (51), a data storage device (65, 405) that is configured to store measurement information and/or a history of the control commands of the wind power generation equipment (41, 42, 43) or the solar power generation equipment (51), an input device (62, 402) to which an operator inputs operation commands, a display device (63, 403) in which the operator checks operation situations, and a communication device (64, 404) for controlling transmitting and receiving of the measurement information and/or the control commands of the wind power generation equipment (41, 42, 43) or the solar power generation equipment (51).

6. The renewable energy power generation system according to claim 5,
   wherein the control calculation device (61, 401) comprises a measurement data processing section (61a, 401a) that is adapted to process data from the data storage device (65, 405), a frequency deviation calculation section (61b, 401b) for calculating the frequency deviation from a frequency of the power grid (1) which is processed by the measurement data processing section (61a, 401a), an expected power output·increase and decrease calculation section (61c, 401c) that is configured to calculate the expected power output of the wind power generation equipment (41, 42, 43) or the solar power generation equipment (51) and the increase and decrease state value thereof from the wind velocity, or the insolation amount, and the air temperature processed in the measurement data processing section, a correlation coefficient calculation section (61d, 401d) that is configured to calculate the correlation coefficient between the frequency deviation calculated by the frequency deviation calculation section (61b, 401b) and the expected power output calculated by the expected power output·increase and decrease calculation section (61c, 401c), an output adjustment determination section (61e, 401e) that is configured to perform determination on whether or not the output adjustment of the wind power generation equipment (41, 42, 43) or the solar power generation equipment (51) is performed by using the correlation coefficient calculated by the correlation coefficient calculation section (61d, 401d) and the increase and decrease state value calculated by the expected power output·increase and decrease calculation section (61c, 401c), and an output adjustment command calculation section (61f, 401f) that is configured to calculate an output adjustment command value of the output adjustment determination section (61e, 401e).

7. The renewable energy power generation system according to claim 2,
   wherein the plurality of renewable energy power generation devices are connected to the control system (6) through a communication line (7),
   wherein the measuring unit is configured to measure meteorological characteristics of each piece of the renewable energy power generation equipment, the calculating unit is configured to calculate an expected power output of each piece of the renewable energy power generation equipment and an increase and decrease state value thereof based on the meteorological characteristics measured by the measuring unit, the calculating unit is configured to calculate a correlation coefficient between the frequency deviation of the power grid (1) and the expected power output of each piece of the renewable energy power generation equipment, and the determining unit is configured to determine whether or not output adjustment of each piece of the renewable energy power generation equipment is necessary by using the correlation coefficient between the frequency deviation and the expected power output, and the increase and decrease state value of the expected power output.

8. The renewable energy power generation system according to claim 7,
wherein the control system (6) is configured such that an output of the renewable energy power generation equipment is restricted in case the determining unit determines that the output adjustment of each piece of the renewable energy power generation equipment is necessary, when the frequency deviation exceeds a predetermined positive threshold value, the correlation coefficient exceeds a positive threshold value, and the expected power output is in an increasing state, and the control system (6) is further configured such that when the frequency deviation is lower than a predetermined negative threshold value, output restriction of the renewable energy power generation equipment is released.

9. The renewable energy power generation system according to claim 7 or 8,
wherein priorities of the renewable energy power generation equipment performing the output restriction are determined by using an integrated value of an output restriction amount of each piece of the renewable energy power generation equipment.

10. The renewable energy power generation system according to claim 2,
wherein the plurality of renewable energy power generation equipment are connected to the control system (6) through the communication line (7), and
wherein the control system (6) comprises a control calculation device (61, 401) that is configured to calculate control commands to be transmitted to each piece of the renewable energy power generation equipment, a data storage device (65, 405) that is configured to store measurement information and/or a history of the control commands of each piece of the renewable energy power generation equipment, an input device (62, 402) configured to receive operation commands from an operator a display device (63, 403) allowing the operator to check operation situations, and a communication device (64, 404) for controlling transmitting and receiving of the measurement information and/or the control commands of each piece of the renewable energy power generation equipment.

11. The renewable energy power generation system according to claim 10,
wherein the control calculation device (61, 401) comprises a measurement data processing section that is configured to process data from the data storage device (65, 405), a frequency deviation calculation section (61b, 401b) for calculating the frequency deviation from a frequency of the power grid (1) which is processed by the measurement data processing section (61a, 401a), an expected power output-increase and decrease calculation section (61c, 401c) that is configured to calculate the expected power output of each piece of the renewable energy power generation equipment and the increase and decrease state value thereof from meteorological characteristics of each piece of the renewable energy power generation equipment processed in the measurement data processing section (61a, 401a), a correlation coefficient calculation section (61d, 401d) that is configured to calculate the correlation coefficient between the frequency deviation calculated by the frequency deviation calculation section (61b, 401b) and the expected power output calculated by the expected power output·increase and decrease calculation section (61c, 401c), an output adjustment determination section (61e, 401e) that is configured to perform determination on whether or not the output adjustment of each piece of the renewable energy power generation equipment is performed by using the correlation coefficient calculated by the correlation coefficient calculation section (61d, 401d) and the increase and decrease state value calculated by the expected power output·increase and decrease calculation section (61c, 401c), an output adjustment command calculation section (61f, 401f) that is configured to calculate an output adjustment command value of the output adjustment determination section (61e, 401e), and an accumulative output restriction amount calculation section (62, 402) that is configured to calculate an accumulative value of a power amount of each piece of the renewable energy power generation equipment that is output-restricted.

12. A control method for renewable energy power generation equipment, which controls renewable energy power generation equipment which includes a plurality of power generation devices generating power by using renewable energy sources and in which the plurality of power generation devices are operated by being connected to a power grid (1), the control method comprising:

calculating an expected power output of the renewable energy power generation equipment and an increase and decrease state value thereof by using a calculating unit that calculates the expected power output of the renewable energy power generation equipment and the increase and decrease state value thereof based on meteorological characteristics measured by a measuring unit that measures the meteorological characteristics of the renewable energy power generation equipment;

the method **characterized in** comprising the steps of

calculating a correlation coefficient of the expected power output of the renewable energy power generation equipment by using a calculating unit that calculates the correlation coefficient between a frequency deviation of the power grid calculated by a calculating unit that calculates the frequency deviation of the power grid (1) and the expected power output of the renewable energy power generation equipment; and

determining whether or not output adjustment of the renewable energy power generation equipment is necessary by using the calculated correlation coefficient between the frequency deviation and the expected power output, and an increase and decrease state value of the expected power output

wherein an output of the renewable energy power generation equipment is restricted in case it is determined that the output adjustment of the renewable energy power generation equipment is necessary, when the frequency deviation exceeds a predetermined positive threshold value, the correlation coefficient exceeds a positive threshold value, and the expected power output is in an increasing state, and when the frequency deviation is lower than a predetermined negative threshold value, output restriction of the renewable energy power generation equipment is released.

## Patentansprüche

1. Steuersystem (6) für eine Anlage zur Erzeugung von Strom aus erneuerbarer Energie, das konfiguriert ist, eine Anlage zur Erzeugung von Strom aus erneuerbarer Energie zu steuern, die mehrere Stromerzeugungsvorrichtungen enthält, die Strom unter Nutzung erneuerbarer Energiequellen erzeugen, und wobei die mehreren Stromerzeugungsvorrichtungen dadurch betrieben werden, dass sie mit einem Stromnetz (1) verbunden sind, wobei das Steuersystem (6) umfasst:

   eine Messeinheit, die konfiguriert ist, eine Frequenz des Stromnetzes (1) zu messen;
   eine Messeinheit, die konfiguriert ist, meteorologische Eigenschaften der Anlage zur Erzeugung von Strom aus erneuerbarer Energie zu messen;
   eine Berechnungseinheit, die konfiguriert ist, eine Frequenzabweichung des Stromnetzes (1) zu berechnen;
   wobei das Steuersystem (6) **dadurch gekennzeichnet ist, dass** es ferner Folgendes umfasst:

      eine Berechnungseinheit, die konfiguriert ist, eine erwartete Stromausgabe der Anlage zur Erzeugung von Strom aus erneuerbarer Energie anhand der durch die Messeinheit gemessenen meteorologischen Eigenschaften zu berechnen und einen Zunahme- und Abnahmezustandswert anhand der meteorologischen Eigenschaften zu berechnen, die durch die Messeinheit gemessen werden, die konfiguriert ist, meteorologische Eigenschaften der Anlage zur Erzeugung von Strom aus erneuerbarer Energie zu messen;
      eine Berechnungseinheit, die konfiguriert ist, einen Korrelationskoeffizienten zwischen der Frequenzabweichung des Stromnetzes (1) und der erwarteten Stromausgabe der Anlage zur Erzeugung von Strom aus erneuerbarer Energie zu berechnen; und
      eine Bestimmungseinheit, die konfiguriert ist, durch Verwenden des Korrelationskoeffizienten zwischen der Frequenzabweichung und der erwarteten Stromausgabe und des Zunahme- und Abnahmezustandswerts der erwarteten Stromausgabe zu bestimmen, ob eine Ausgabeanpassung der Anlage zur Erzeugung von Strom aus erneuerbarer Energie notwendig ist oder nicht;

   wobei das Steuersystem (6) derart konfiguriert ist, dass eine Ausgabe der Anlage zur Erzeugung von Strom aus erneuerbarer Energie in dem Fall begrenzt wird, in dem die Bestimmungseinheit bestimmt, dass die Ausgabeanpassung der Anlage zur Erzeugung von Strom aus erneuerbarer Energie notwendig ist, wenn die Frequenzabweichung einen vorbestimmten positiven Schwellenwert übersteigt, der Korrelationskoeffizient einen positiven Schwellenwert übersteigt und die erwartete Stromausgabe in einem zunehmenden Zustand ist, und das Steuersystem (6) ferner derart konfiguriert ist, dass dann, wenn die Frequenzabweichung niedriger als ein vorbestimmter negativer Schwellenwert ist, eine Ausgabebegrenzung der Anlage zur Erzeugung von Strom aus erneuerbarer Energie aufgehoben wird.

2. System zur Erzeugung von Strom aus erneuerbarer Energie, das eine Anlage zur Erzeugung von Strom aus erneuerbarer Energie umfasst, die mehrere Vorrichtungen zur Erzeugung von Strom aus erneuerbarer Energie enthält, die mit einem Stromnetz (1) und mit dem Steuersystem für die Anlage zur Erzeugung von Strom aus erneuerbarer Energie nach Anspruch 1 verbunden sind.

3. System zur Erzeugung von Strom aus erneuerbarer Energie nach Anspruch 2,
   wobei die mehreren Stromerzeugungsvorrichtungen eine Windstromerzeugungsanlage (41, 42, 43) sind und wobei die Windstromerzeugungsanlage ein Windstromerzeugungssystem (41a, 42a, 43a), das zumindest aus mehreren Windkraftanlagen, Generatoren und einem Anschlussstromrichter gebildet ist, einen Anschlusstransformator (41b, 42b, 43b, 51b) zum Anschließen des Windstromerzeugungssystems (41a, 42a, 43a) an das Stromnetz (1), einen Spannungsdetektor (41c, 42c, 43c, 51c) und einen Stromdetektor (41d, 42d, 43d, 51d), die konfiguriert sind, eine Spannung und einen Strom eines Anschlusspunkts in das Stromnetz (1) zu messen, und eine Steuervorrichtung, die eine Funktion des Berechnens und Sendens von Steuerbefehlen zum Anpassen einer Ausgabe der Windstromerzeugungsanlage (41, 42, 43) anhand der Spannung und des Stroms, die durch den Spannungsdetektor (41c, 42c, 43c, 51c) und den Stromdetektor (41d, 42d, 43d, 51d) gemessen werden, einer Stromerzeugungsausgabe des Windstromerzeugungssystems (41a, 42a, 43a) und mindestens einer Windgeschwindigkeit besitzt, umfasst.

4. System zur Erzeugung von Strom aus erneuerbarer Energie nach Anspruch 2,
   wobei die mehreren Stromerzeugungsvorrichtungen eine Solarstromerzeugungsanlage (51) sind und wobei die Solarstromerzeugungsanlage (51) mehrere Solarkollektoren (51a), einen Anschlusstransformator (41b, 42b, 43b, 51b) zum Anschließen der Solarkollektoren (51a) an das Stromnetz (1), einen Spannungsdetektor (41c, 42c, 43c, 51c) und einen Stromdetektor (41d, 42d, 43d, 51d), die konfiguriert sind, eine Spannung und einen Strom eines Anschlusspunkts in das Stromnetz (1) zu messen, eine Steuervorrichtung, die eine Funktion des Berechnens und Sendens von Steuerbefehlen zum Anpassen einer Ausgabe der Solarstromerzeugungsanlage (51) anhand der Spannung und des Stroms, die durch den Spannungsdetektor (41c, 42c, 43c, 51c) und den Stromdetektor (41d, 42d, 43d, 51d) gemessen werden, einer Stromerzeugungsausgabe der Solarkollektoren (51a), eines Sonneneinstrahlungsbetrags und einer Lufttemperatur besitzt.

5. System zur Erzeugung von Strom aus erneuerbarer Energie nach Anspruch 3 oder 4,
   wobei die Steuervorrichtung (40a, 40b, 40c, 50) eine Steuerberechnungsvorrichtung (61, 401), die ausgelegt ist, die Steuerbefehle zu berechnen, die an die Windstromerzeugungsanlage (41, 42, 43) oder die Solarstromerzeugungsanlage (51) zu senden sind, eine Datenspeichervorrichtung (65, 405), die konfiguriert ist, Messinformationen und/oder eine Entwicklung der Steuerbefehle der Windstromerzeugungsanlage (41, 42, 43) oder der Solarstromerzeugungsanlage (51) zu speichern, eine Eingabevorrichtung (62, 402), in die eine Bedienungsperson Betriebsbefehle eingibt, eine Anzeigevorrichtung (63, 403), in der die Bedienungsperson Betriebssituationen überprüft, und eine Kommunikationsvorrichtung (64, 404) zum Steuern des Sendens und Empfangens der Messinformationen und/oder der Steuerbefehle der Windstromerzeugungsanlage (41, 42, 43) oder der Solarstromerzeugungsanlage (51) umfasst.

6. System zur Erzeugung von Strom aus erneuerbarer Energie nach Anspruch 5,
   wobei die Steuerberechnungsvorrichtung (61, 401) umfasst: einen Messdatenverarbeitungsabschnitt (61a, 401a), der ausgelegt ist, Daten von der Datenspeichervorrichtung (65, 405) zu verarbeiten, einen Frequenzabweichungs-Berechnungsabschnitt (61b, 401b) zum Berechnen der Frequenzabweichung von einer Frequenz des Stromnetzes (1), die durch den Messdatenverarbeitungsabschnitt (61a, 401a) verarbeitet wird, einen Abschnitt zur Berechnung einer erwarteten Stromausgabezunahme und -abnahme (61c, 401c), der konfiguriert ist, die erwartete Stromausgabe der Windstromerzeugungsanlage (41, 42, 43) oder der Solarstromerzeugungsanlage (51) und ihren Zunahme- und Abnahmezustandswert aus der Windgeschwindigkeit oder dem Sonneneinstrahlungsbetrag und der Lufttemperatur zu berechnen, die in dem Messdatenverarbeitungsabschnitt verarbeitet wird, einen Korrelationskoeffizienten-Berechnungsabschnitt (61d, 401d), der konfiguriert ist, den Korrelationskoeffizienten zwischen der durch den Frequenzabweichungs-Berechnungsabschnitt (61b, 401b) berechneten Frequenzabweichung und der durch den Abschnitt zur Berechnung der erwarteten Stromausgabezunahme und -abnahme berechneten erwarteten Stromausgabe zu berechnen, einen Ausgabeanpassungs-Bestimmungsabschnitt (61e, 401e), der konfiguriert ist, eine Bestimmung auszuführen, ob die Ausgabeanpassung der Windstromerzeugungsanlage (41, 42, 43) oder der Solarstromerzeugungsanlage (51) unter Verwendung des durch den Korrelationskoeffizienten-Berechnungsabschnitt (61d, 401d) berechneten Korrelationskoeffizienten und des durch den Abschnitt zu Berechnung der erwarteten Stromausgabezunahme und -abnahme berechneten Zunahme- und Abnahmezustandswerts ausgeführt wird oder nicht, und einen Ausgabeanpassungsbefehls-Berechnungsabschnitt (61f, 401f), der konfiguriert ist, einen Ausgabeanpassungsbefehlswert des Ausgabeanpassungs-Bestimmungsabschnitts (61e, 401e) zu berechnen.

7. System zur Erzeugung von Strom aus erneuerbarer Energie nach Anspruch 2,
   wobei die mehreren Vorrichtungen zur Erzeugung von Strom aus erneuerbarer Energie mit dem Steuersystem (6) durch eine Kommunikationsleitung (7) verbunden sind,
   wobei die Messeinheit konfiguriert ist, meteorologische Eigenschaften jedes Teils der Anlage zur Erzeugung von Strom aus erneuerbarer Energie zu messen, die Berechnungseinheit konfiguriert ist, eine erwartete Stromausgabe jedes Teils der Anlage zur Erzeugung von Strom aus erneuerbarer Energie und ihren Zunahme- und Abnahmezustandswert anhand der durch die Messeinheit gemessenen meteorologischen Eigenschaften zu berechnen, die Berechnungseinheit konfiguriert ist, einen Korrelationskoeffizienten zwischen der Frequenzabweichung des Stromnetzes (1) und der erwarteten Stromausgabe jedes Teils der Anlage zur Erzeugung von Strom aus erneuerbarer Energie zu berechnen, und die Bestimmungseinheit konfiguriert ist, durch Verwenden des Korrelationskoeffizienten zwischen der Frequenzabweichung und der erwarteten Stromausgabe und des Zunahme- und Abnahmezustandswerts der erwarteten Stromausgabe zu bestimmen, ob eine Ausgabeanpassung jedes Teils der Anlage zur Erzeugung von Strom aus erneuerbarer Energie notwendig ist oder nicht.

8. System zur Erzeugung von Strom aus erneuerbarer Energie nach Anspruch 7,
   wobei das Steuersystem (6) derart konfiguriert ist, dass eine Ausgabe der Anlage zur Erzeugung von Strom aus erneuerbarer Energie in einem Fall, in dem die Bestimmungseinheit bestimmt, dass die Ausgabeanpassung jedes Teils der Anlage zur Erzeugung von Strom aus erneuerbarer Energie notwendig ist, begrenzt wird, wenn die Frequenzabweichung einen vorbestimmten positiven Schwellenwert übersteigt, der Korrelationskoeffizient einen positiven Schwellenwert übersteigt und die erwartete Stromausgabe in einem zunehmenden Zustand ist, und das Steuersystem (6) ferner derart konfiguriert ist, dass
   dann, wenn die Frequenzabweichung niedriger als ein vorbestimmter negativer Schwellenwert ist, die Ausgabebegrenzung der Anlage zur Erzeugung von Strom aus erneuerbarer Energie aufgehoben wird.

9. System zur Erzeugung von Strom aus erneuerbarer Energie nach Anspruch 7 oder 8,
   wobei Prioritäten der Anlage zur Erzeugung von Strom aus erneuerbarer Energie, das die Ausgabebegrenzung ausführt, durch Verwenden eines integrierten Werts eines Ausgabebegrenzungsbetrags jedes Teils der Anlage zur Erzeugung von Strom aus erneuerbarer Energie bestimmt werden.

10. System zur Erzeugung von Strom aus erneuerbarer Energie nach Anspruch 2,
    wobei die mehreren Anlagen zur Erzeugung von Strom aus erneuerbarer Energie mit dem Steuersystem (6) durch die Kommunikationsleitung (7) verbunden sind und
    wobei das Steuersystem (6) eine Steuerungsberechnungsvorrichtung (61, 401), die konfiguriert ist, Steuerbefehle zu berechnen, die an jedes Teil der Anlage zur Erzeugung von Strom aus erneuerbarer Energie zu senden sind, eine Datenspeichervorrichtung (65, 405), die konfiguriert ist, Messinformationen und/oder eine Entwicklung der Steuerbefehle jedes Teils der Anlage zur Erzeugung von Strom aus erneuerbarer Energie zu speichern, eine Eingabevorrichtung (62, 402), die konfiguriert ist, Betriebsbefehle von einer Bedienungsperson zu empfangen, eine Anzeigevorrichtung (63, 403), die der Bedienungsperson erlaubt, Betriebssituationen zu überprüfen, und eine Kommunikationsvorrichtung (64, 404) zum Steuern des Sendens und Empfangens der Messinformationen und/oder der Steuerbefehle jedes Teils der Anlage zur Erzeugung von Strom aus erneuerbarer Energie umfasst.

11. System zur Erzeugung von Strom aus erneuerbarer Energie nach Anspruch 10,
    wobei die Steuerungsberechnungsvorrichtung (61, 401) umfasst: einen Messdatenverarbeitungsabschnitt, der konfiguriert ist, Daten von der Datenspeichervorrichtung (65, 405) zu verarbeiten, einen Frequenzabweichungs-Berechnungsabschnitt (61b, 401b) zum Berechnen der Frequenzabweichung von einer Frequenz des Stromnetzes (1), die durch den Messdatenverarbeitungsabschnitt (61a, 401a) verarbeitet wird, einen Abschnitt zur Berechnung der erwarteten Stromausgabezunahme und -abnahme (61c, 401c), der konfiguriert ist, die erwartete Stromausgabe jedes Teils der Anlage zur Erzeugung von Strom aus erneuerbarer Energie und ihren Zunahme- und Abnahmezustandswert aus meteorologischen Eigenschaften jedes Teils der Anlage zur Erzeugung von Strom aus erneuerbarer Energie zu berechnen, die in dem Messdatenverarbeitungsabschnitt (61a, 401a) verarbeitet werden, einen Korrelationskoeffizienten-Berechnungsabschnitt (61d, 401d), der konfiguriert ist, den Korrelationskoeffizienten zwischen der durch den Frequenzabweichungs-Berechnungsabschnitt (61b, 401b) berechneten Frequenzabweichung und der durch den Abschnitt zur Berechnung der erwarteten Stromausgabezunahme und -abnahme (61c, 401c) berechneten erwarteten Stromausgabe zu berechnen, einen Ausgabeanpassungs-Bestimmungsabschnitt (61e, 401e), der konfiguriert ist, durch Verwenden des durch den Korrelationskoeffizienten-Berechnungsabschnitt (61d, 401d) berechneten Korrelationskoeffizienten und des durch den Abschnitt zur Berechnung der erwarteten Stromausgabezunahme und -abnahme berechneten Zunahme- und Abnahmezustandswerts eine Bestimmung auszuführen, ob die Ausgabeanpassung jedes Teils der Anlage zur Erzeugung von Strom aus erneuerbarer Energie ausgeführt wird oder nicht, einen Ausgabeanpassungsbefehls-Berechnungsabschnitt (61f, 401f), der konfiguriert ist, einen Ausgabeanpassungsbefehlswert des Ausgabeanpassungs-Bestimmungsabschnitts (6e, 401e) zu berechnen, und einen Abschnitt zur Berechnung eines kumulativen Ausgabebegrenzungsbetrags (62, 402), der konfiguriert ist, einen kumulativen Wert eines Strombetrags jedes Teils der Anlage zur Erzeugung von Strom aus erneuerbarer Energie, dessen Ausgabe begrenzt ist, zu berechnen.

12. Steuerverfahren für ein Anlage zur Erzeugung von Strom aus erneuerbarer Energie, das die Anlage zur Erzeugung von Strom aus erneuerbarer Energie steuert, das mehrere Stromerzeugungsvorrichtungen, die durch Verwenden erneuerbarer Energiequellen Strom erzeugen, enthält, und wobei die mehreren Stromerzeugungsvorrichtungen dadurch betrieben werden, dass sie mit einem Stromnetz (1) verbunden sind, wobei das Steuerverfahren Folgendes umfasst:

Berechnen einer erwarteten Stromausgabe der Anlage zur Erzeugung von Strom aus erneuerbarer Energie und ihres Zunahme- und Abnahmezustandswerts durch Verwenden einer Berechnungseinheit, die die erwartete Stromausgabe der Anlage zur Erzeugung von Strom aus erneuerbarer Energie und ihren Zunahme- und Abnahmezustandswert anhand von meteorologischen Eigenschaften berechnet, die durch eine Messeinheit gemessen werden, die meteorologische Eigenschafen der Anlage zur Erzeugung von Strom aus erneuerbarer Energie misst;

wobei das Verfahren **dadurch gekennzeichnet ist, dass** es die folgenden Schritte umfasst:

Berechnen eines Korrelationskoeffizienten der erwarteten Stromausgabe der Anlage zur Erzeugung von Strom aus erneuerbarer Energie durch Verwenden einer Berechnungseinheit, die den Korrelationskoeffizienten zwischen einer Frequenzabweichung des Stromnetzes, die durch eine Berechnungseinheit berechnet wird, die die Frequenzabweichung des Stromnetzes (1) berechnet, und der erwarteten Stromausgabe der Anlage zur Erzeugung von Strom aus erneuerbarer Energie berechnet; und
Bestimmen, ob eine Ausgangsanpassung der Anlage zur Erzeugung von Strom aus erneuerbarer Energie notwendig ist, durch Verwenden des berechneten Korrelationskoeffizienten zwischen der Frequenzabweichung und der erwarteten Stromausgabe und eines Zunahme- und Abnahmezustandswerts der erwarteten Stromausgabe;

wobei eine Ausgabe der Anlage zur Erzeugung von Strom aus erneuerbarer Energie in dem Fall begrenzt wird, in dem bestimmt wird, dass die Ausgabeanpassung der Anlage zur Erzeugung von Strom aus erneuerbarer Energie notwendig ist, wenn die Frequenzabweichung einen vorbestimmten positiven Schwellenwert übersteigt, der Korrelationskoeffizient einen positiven Schwellenwert übersteigt und die erwartete Stromausgabe in einem zunehmenden Zustand ist, und
dann, wenn die Frequenzabweichung niedriger als ein vorbestimmter negativer Schwellenwert ist, eine Ausgabebegrenzung der Anlage zur Erzeugung von Strom aus erneuerbarer Energie aufgehoben wird.

## Revendications

1. Système de commande (6) pour équipement de génération de puissance à énergie renouvelable, qui est configuré pour commander un équipement de génération de puissance à énergie renouvelable qui inclut une pluralité de dispositifs de génération de puissance qui génèrent une puissance en utilisant des sources d'énergies renouvelables et dans lequel la pluralité de dispositifs de génération de puissance sont mis en fonctionnement en étant connectés à un réseau de puissance (1), le système de commande (6) comprenant :

une unité de mesure qui est configurée pour mesurer une fréquence du réseau de puissance (1) ;
une unité de mesure qui est configurée pour mesurer des caractéristiques météorologiques de l'équipement de génération de puissance à énergie renouvelable ;
une unité de calcul qui est configurée pour calculer une déviation de fréquence du réseau de puissance (1) ;
le système de commande (6) étant **caractérisé en ce qu'**il comprend en outre :

une unité de calcul qui est configurée pour calculer une sortie de puissance attendue de l'équipement de génération de puissance à énergie renouvelable sur la base des caractéristiques météorologiques mesurées par l'unité de mesure et pour calculer une valeur d'état d'augmentation et de diminution de celle-ci sur la base des caractéristiques météorologiques mesurées par l'unité de mesure qui est configurée pour mesurer des caractéristiques météorologiques de l'équipement de génération de puissance à énergie renouvelable ;
une unité de calcul qui est configurée pour calculer un coefficient de corrélation entre la déviation de fréquence du réseau de puissance (1) et la sortie de puissance attendue de l'équipement de génération de puissance à énergie renouvelable ; et
une unité de détermination qui est configurée pour déterminer si un ajustement de sortie de l'équipement de génération de puissance à énergie renouvelable est nécessaire ou non en utilisant le coefficient de corrélation entre la déviation de fréquence et la sortie de puissance attendue, et la valeur d'état d'augmentation et de diminution de la sortie de puissance attendue ;

dans lequel le système de commande (6) est configuré de telle façon qu'une sortie de l'équipement de génération de puissance à énergie renouvelable est restreinte dans le cas où l'unité de détermination détermine que l'ajustement de sortie de l'équipement de génération de puissance à énergie renouvelable est nécessaire, quand la déviation de fréquence excède une valeur seuil positive prédéterminée, le coefficient de corrélation excède une valeur seuil positive, et la sortie de puissance attendue est dans un état d'augmentation, et le système de commande (6) est en outre configuré de telle façon que lorsque la déviation de fréquence est inférieure à une valeur seuil négative prédéterminée, une restriction de sortie de l'équipement de génération de puissance à énergie renouvelable est relâchée.

2. Système de génération de puissance à énergie renouvelable comprenant un équipement de génération de puissance à énergie renouvelable qui inclut une pluralité de dispositifs de génération de puissance à énergie renouvelable connectés à un réseau de puissance (1) et le système de commande pour équipement de génération de puissance à énergie renouvelable en accord avec la revendication 1.

3. Système de génération de puissance à énergie renouvelable selon la revendication 2, dans lequel la pluralité de dispositifs de génération de puissance est un équipement de génération de puissance éolienne (41, 42, 43), et dans lequel l'équipement de génération de puissance éolienne inclut un système de génération de puissance éolienne (41a, 42a, 43a) qui est formé par au moins une pluralité d'éoliennes, de générateurs, et un convertisseur de puissance de connexion, un transformateur de connexion (41b, 42b, 43b, 51b) pour connecter le système de génération de puissance éolienne (41a, 42a, 43a) au réseau de puissance (1), un détecteur de tension (41c, 42c, 43c, 51c) et un détecteur de courant (41d, 42d, 43d, 51b) qui sont configurés pour mesurer une tension et un courant d'un point de connexion au réseau de puissance (1), et un dispositif de commande qui a pour fonction de calculer et de transmettre des ordres de commande pour ajuster une sortie de l'équipement de génération de puissance éolienne (41, 42, 43) en se basant sur la tension et sur le courant qui sont mesurés par le détecteur de tension (41c, 42c, 43c, 51c) et par le détecteur de courant (41d, 42d, 43d, 51b), une sortie de génération de puissance du système de génération de puissance éolienne (41a, 42a, 43a), et au moins une vitesse du vent.

4. Système de génération de puissance à énergie renouvelable selon la revendication 2, dans lequel la pluralité de dispositifs de génération de puissance est un équipement de génération de puissance solaire (51), et dans lequel l'équipement de génération de puissance solaire (51) inclut une pluralité de panneaux solaires (51a), un transformateur de connexion (41b, 42b, 43b, 51b) pour connecter les panneaux solaires (51a) au réseau de puissance (1), un détecteur de tension (41c, 42c, 43c, 51c) et un détecteur de courant (41d, 42d, 43d, 51b) qui sont configurés pour mesurer une tension et un courant d'un point de connexion au réseau de puissance (1), un dispositif de commande qui a pour fonction de calculer et de transmettre des ordres de commande pour ajuster une sortie de l'équipement de génération de puissance solaire (51) en se basant sur la tension et sur le courant qui sont mesurés par le détecteur de tension (41c, 42c, 43c, 51c) et par le détecteur de courant (41d, 42d, 43d, 51b), une sortie de génération de puissance des panneaux solaires (51a), une durée d'insolation, et une température de l'air.

5. Système de génération de puissance à énergie renouvelable selon la revendication 3 ou 4, dans lequel le dispositif de commande (40a, 40b, 40c, 50) comprend un dispositif de calcul (61, 401) qui est adapté pour calculer les ordres de commande à transmettre à l'équipement de génération de puissance éolienne (41, 42, 43) ou à l'équipement de génération de puissance solaire (51), un dispositif de stockage de données (65, 405) qui est configuré pour stocker des informations de mesure et/ou un historique des ordres de commande de l'équipement de génération de puissance éolienne (41, 42, 43) ou de l'équipement de génération de puissance solaire (51), un dispositif de saisie (62, 402) dans lequel un opérateur saisit des ordres de fonctionnement, un dispositif d'affichage (63, 403) dans lequel l'opérateur vérifie des situations de fonctionnement, et un dispositif de communication (64, 404) pour commander la transmission et la réception des informations de mesure et/ou des ordres de commande de l'équipement de génération de puissance éolienne (41, 42, 43) ou de l'équipement de génération de puissance solaire (51).

6. Système de génération de puissance à énergie renouvelable selon la revendication 5, dans lequel le dispositif de calcul de commande (61, 401) comprend une section de traitement de données de mesure (61a, 401a) qui est adaptée pour traiter des données provenant du dispositif de stockage de données (65, 405), une section de calcul de déviation de fréquence (61b, 401b) pour calculer la déviation de fréquence par rapport à une fréquence du réseau de puissance (1) qui est traitée par la section de traitement de données de mesure (61a, 401a), une section de calcul d'augmentation et de diminution de puissance de sortie attendue (61c, 401c) qui est configurée pour calculer la puissance de sortie attendue de l'équipement de génération de puissance éolienne (41, 42, 43) ou de l'équipement de génération de puissance solaire (51) et la valeur d'état d'augmentation et de diminution de celle-ci à partir de la vitesse du vent, ou de la durée d'insolation, et de la température de l'air traitée dans la section de traitement de données de mesure, une section de calcul de coefficient de corrélation (61d, 401d) qui est configurée pour calculer le coefficient de corrélation entre la déviation de fréquence calculée par la section de calcul de déviation de fréquence (61b, 401b) et la puissance de sortie attendue calculée par la section de calcul d'augmentation et de diminution de puissance de sortie attendue (61c, 401c), une section de détermination d'ajustement de sortie (61e, 401e) qui est configurée pour effectuer une détermination quant à savoir si l'ajustement de sortie de l'équipement de génération de puissance éolienne (41, 42, 43) ou de l'équipement de génération de puissance solaire (51) est exécuté ou non en utilisant le coefficient de corrélation calculé par la section de calcul de coefficient de corrélation (61d, 401d) et la valeur d'état d'augmentation et de diminution calculée par la section de calcul d'augmentation et de diminution de puissance de sortie attendue (61c, 401c), et une section de calcul d'ordre d'ajustement de sortie (61f, 401f) qui est configurée pour calculer une valeur d'ordre d'ajustement de sortie de la section de détermination d'ajustement de sortie (61e, 401e).

7. Système de génération de puissance à énergie renouvelable selon la revendication 2,
dans lequel la pluralité de dispositifs de génération de puissance à énergie renouvelable sont connectés au système de commande (6) via une ligne de communication (7),
dans lequel l'unité de mesure est configurée pour mesurer des caractéristiques météorologiques de chaque pièce de l'équipement de génération de puissance à énergie renouvelable, l'unité de calcul est configurée pour calculer une puissance de sortie attendue de chaque pièce de l'équipement de génération de puissance à énergie renouvelable et une valeur d'état d'augmentation et de diminution de celle-ci sur la base des caractéristiques météorologiques mesurées par l'unité de mesure, l'unité de calcul est configurée pour calculer un coefficient de corrélation entre la déviation de fréquence du réseau de puissance (1) et la puissance de sortie attendue de chaque pièce de l'équipement de génération de puissance à énergie renouvelable, et l'unité de détermination est configurée pour déterminer si un ajustement de sortie de chaque pièce de l'équipement de génération de puissance à énergie renouvelable est nécessaire ou non en utilisant le coefficient de corrélation entre la déviation de fréquence et la puissance de sortie attendue, et la valeur d'état d'augmentation et de diminution de la puissance de sortie attendue.

8. Système de génération de puissance à énergie renouvelable selon la revendication 7,
dans lequel le système de commande (6) est configuré de telle façon qu'une sortie de l'équipement de génération de puissance à énergie renouvelable est restreinte dans le cas où l'unité de détermination détermine que l'ajustement de sortie de chaque pièce de l'équipement de génération de puissance à énergie renouvelable est nécessaire, quand la déviation de fréquence excède une valeur seuil positive prédéterminée, le coefficient de corrélation excède une valeur seuil positive, et la puissance de sortie attendue est dans un état d'augmentation,
le système de commande (6) est en outre configuré de telle façon que lorsque la déviation de fréquence est inférieure à une valeur seuil négative prédéterminée, la restriction de sortie de l'équipement de génération de puissance à énergie renouvelable est relâchée.

9. Système de génération de puissance à énergie renouvelable selon la revendication 7 ou 8,
dans lequel les priorités de l'équipement de génération de puissance à énergie renouvelable qui effectue la restriction de sortie sont déterminées en utilisant une valeur intégrée d'une quantité de restriction de sortie de chaque pièce de l'équipement de génération de puissance à énergie renouvelable.

10. Système de génération de puissance à énergie renouvelable selon la revendication 2,
dans lequel la pluralité d'équipements de génération de puissance à énergie renouvelable sont connectés au système de commande (6) via la ligne de communication (7), et
dans lequel le système de commande (6) comprend un dispositif de calcul de commande (61, 401) qui est configuré pour calculer des ordres de commande à transmettre à chaque pièce de l'équipement de génération de puissance à énergie renouvelable, un dispositif de stockage (65, 405) qui est configuré pour stocker des informations de mesure et/ou un historique des ordres de commande de chaque pièce de l'équipement de génération de puissance à énergie renouvelable, un dispositif de saisie (62, 402) configuré pour recevoir des ordres de fonctionnement de la part d'un opérateur, un dispositif d'affichage (63, 403) permettant à l'opérateur de vérifier des situations de fonctionnement, et un dispositif de communication (64, 404) pour commander la transmission et la réception des informations de mesure et/ou des ordres de commande de chaque pièce de l'équipement de génération de puissance à énergie renouvelable.

11. Système de génération de puissance à énergie renouvelable selon la revendication 10,
dans lequel le dispositif de calcul de commande (61, 401) comprend une section de traitement de données de mesure qui est configurée pour traiter des données provenant du dispositif de stockage de données (65, 405), une section de calcul de déviation de fréquence (61b, 401b) pour calculer la déviation de fréquence par rapport à une fréquence du réseau de puissance (1) qui est traitée par la section de traitement de données de mesure (61a, 401a), une section de calcul d'augmentation et de diminution de puissance de sortie attendue (61c, 401c) qui est configurée pour calculer la puissance de sortie attendue de chaque pièce de l'équipement de génération de puissance à énergie renouvelable et la valeur d'état d'augmentation et de diminution de celle-ci à partir des caractéristiques météorologiques de chaque pièce de l'équipement de génération de puissance à énergie renouvelable traitées dans la section de traitement de données de mesure (61a, 401a), une section de calcul de coefficient de corrélation (61d, 401d) qui est configurée pour calculer le coefficient de corrélation entre la déviation de fréquence calculée par la section de calcul de déviation de fréquence (61b, 401b) et la puissance de sortie attendue calculée par la section de calcul d'augmentation et de diminution de puissance de sortie attendue (61c, 401c), une section de détermination d'ajustement de sortie (61e, 401e) qui est configurée pour effectuer une détermination quant à savoir si l'ajustement de sortie de chaque pièce de l'équipement de génération de puissance à énergie renouvelable est exécuté ou non en utilisant le coefficient de corrélation calculé par la section de calcul de coefficient de corrélation (61d, 401d) et la valeur d'état d'augmentation et de diminution calculée par la section de calcul d'augmentation et de diminution de puissance de sortie attendue (61c, 401c), une section de calcul d'ordre d'ajustement de sortie (61f, 401f) qui est configurée pour calculer une valeur d'ordre d'ajustement de sortie de la section de détermination d'ajustement de sortie (61e, 401e), et une section de calcul de quantité de restriction de sortie cumulative (62, 402) qui est configurée pour calculer une valeur cumulative d'une quantité de puissance de chaque pièce de l'équipement de génération de puissance à énergie renouvelable dont la sortie est restreinte.

12. Procédé de commande pour équipement de génération de puissance à énergie renouvelable, qui commande un équipement de génération de puissance à énergie renouvelable qui inclut une pluralité de dispositifs de génération de puissance générant une puissance en utilisant des sources d'énergies renouvelables et dans lequel la pluralité de dispositifs de génération de puissance sont mis en fonctionnement en étant connectés à un réseau de puissance (1), le procédé de commande comprenant l'étape consistant à :

calculer une puissance de sortie attendue de l'équipement de génération de puissance à énergie renouvelable et une valeur d'état d'augmentation et de diminution de celle-ci en utilisant une unité de calcul qui calcule la puissance de sortie attendue de l'équipement de génération de puissance à énergie renouvelable et la valeur d'état d'augmentation et de diminution de celle-ci sur la base de caractéristiques météorologiques mesurées par une unité de mesure qui mesure les caractéristiques météorologiques de l'équipement de génération de puissance à énergie renouvelable ;
le procédé étant **caractérisé en ce qu'**il comprend les étapes consistant à :

calculer un coefficient de corrélation de la puissance de sortie attendue de l'équipement de génération de puissance à énergie renouvelable en utilisant une unité de calcul qui calcule le coefficient de corrélation entre une déviation de fréquence du réseau de puissance calculée par une unité de calcul qui calcule la déviation de fréquence du réseau de puissance (1) et la puissance de sortie attendue de l'équipement de génération de puissance à énergie renouvelable ; et
déterminer si un ajustement de sortie de l'équipement de génération de puissance à énergie renouvelable est nécessaire ou non en utilisant le coefficient de corrélation calculé entre la déviation de fréquence et la puissance de sortie attendue, et une valeur d'état d'augmentation et de diminution de la sortie de puissance attendue,

dans lequel une sortie de l'équipement de génération de puissance à énergie renouvelable est restreinte dans le cas où il est déterminé que l'ajustement de sortie de l'équipement de génération de puissance à énergie renouvelable est nécessaire, quand la déviation de fréquence excède une valeur seuil positive prédéterminée, le coefficient de corrélation excède une valeur seuil positive, et la puissance de sortie attendue est dans un état en augmentation, et quand la déviation de fréquence est inférieure à une valeur seuil négative prédéterminée, la restriction de sortie de l'équipement de génération de puissance à énergie renouvelable est relâchée.

EP 3 012 937 B1

[Fig. 1]

EP 3 012 937 B1

[Fig. 2]

[Fig. 3]

22

[Fig. 4]

```
                              ┌──────────┐
                              │  START   │
                              └────┬─────┘
                                   │
   ┌──────────────────────────────┼───────────────┐
   │ ┌────────────────────────────┼─────────┐     │
   │ │                            ↓          │     │
┌──┼─┼──────────────────────┐  ┌──────────────┐   │
│  │ │(1): GRID FREQUENCY    │  │MEASUREMENT DATA│ ～S1
│  │ │(2): POWER OUTPUT OF RESP│→│  IS READ     │   │
│  │ │(3): WIND VELOCITY    │  └──────┬───────┘   │
│  │ │(4): INSOLATION ·     │         │           │
│  │ │     TEMPERATURE      │         ↓           │
│  │ └─────────────────────┘  ┌──────────────┐   │
│  │                          │CALCULATION OF FREQUENCY│ ～S2
│  │                          │  DEVIATION ΔF  │   │
│  │                          └──────┬───────┘   │
```

MEASUREMENT DATA IS READ ～S1

CALCULATION OF FREQUENCY DEVIATION $\Delta F$ ～S2

CALCULATION OF EXPECTED POWER AMOUNT $P_1*$ AND INCREASE AND DECREASE TREND $\Delta P_i*$ OF RESP ～S3

CALCULATION OF FREQUENCY DEVIATION $\Delta F$ AND CORRELATION COEFFICIENT CI OF EXPECTED POWER GENERATION AMOUNT $P_1*$ OF RESP ～S4

ADJUSTMENT IS NOT REQUIRED ← DETERMINATION OF START/RELEASE OF OUTPUT RESTRICTION OF RESP ～S5 → RELEASE

START

CALCULATION OF UPPER LIMIT VALUE OF OUTPUT OF RESP ～S6

OUTPUT OF CONTROL COMMAND (OUTPUT RESTRICTION VALUE AND RELEASE COMMAND VALUE TO EACH WINDMILL) ～S7

23

[Fig. 5]

| (a) | (b) | (c) |

POSITIVE CORRELATION
(OUTPUT RESTRICTION EXISTS)

NON-CORRELATION
(OUTPUT RESTRICTION DOES NOT EXIST)

NEGAITIVE CORRELATION
(OUTPUT RESTRICTION DOES NOT EXIST)

[Fig. 6]

(a)
WIND POWER
GENERATION STATION 41

(b)
WIND POWER
GENERATION STATION 42

[Fig. 7]

(a)
WIND POWER
GENERATION STATION 41

(b)
WIND POWER
GENERATION STATION 42

[Fig. 8]

[Fig. 9]

[Fig. 10]

[Fig. 11]

**EP 3 012 937 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2603696 A1
- EP 2452068 A2
- EP 2270332 A1
- JP 2007009804 A
- JP 2013501484 T